# EUROPEAN PATENT APPLICATION

(11) **EP 1 020 123 A1**
(43) Date of publication of application: **19.07.2000**
(21) Application number: 99830013.1
(22) Date of filing: 18.01.1999
(51) Int. Cl.: A23L 1/03, A23L 2/52

(54) **Beverages containing live lactic bacteria**

(71) Applicant: Sitia-Yomo S.p.A., 20123 Milano (IT)
(72) Inventor: Cavaliere Vesely, Renata Maria Anna, Milano (IT); Giani, Giovanni, Pasturago di Vernate (MI) (IT); Maiocchi, Gianluigi, Codogno (MI) (IT)
(74) Representative: Righetti, Giuseppe

(57) **Abstract**

The invention relates to beverages for food use in combination with a mixture of lyophilized live bacteria comprising at least three bacteria species selected from *Bifidobacterium breve, Bifidobacterium infantis, Bifidobacterium longum, Bifidobacterium bifidum, Lactobacillus acidophilus, Streptococcus thermophilus, Lactobacillus bulgaricus, Lactobacillus casei, Lactobacillus plantarum, Streptococcus faecium.*

## Description

The present invention relates to the use of lyophilized live lactic bacteria as an addition to beverages for food use, and to a kit comprising two containers respectively holding a beverage for food use and said mixture of lyophilized live lactic bacteria intended for being added to said beverage and combined therewith at the moment of being consumed, as well as to beverages for food use containing mixtures of live lactic bacteria.

In the field of beverages, various typologies of foodstuffs are available on the market. Some of these typologies consist of beverages that are sold without any specific functional indication for consumers. This is the case of beverages that have been only studied for satisfying the consumer's thirst and therefore his/her need for drinking, and they are the so-called "ordinary beverages".

However, also available on the market are some typologies of foodstuffs consisting of beverages reproducing some "information" on their packages. The last-mentioned beverages, in addition to satisfying the consumer's thirst, also produce some beneficial effects on the organism. The composition of this kind of beverages is subjected to continuous modifications in time, depending on the commercial impulses in response to the market research and the new consumer requirements. Therefore, selection of a component to be added to a beverage, in respect of another, is not done for the purpose of characterising that type of beverage in a specific manner so as to give it those potentialities that are adapted to exert given specific functional effects on the organism. Consequently, the aim of putting on the market beverages having specific functional effects targeted at exerting particular actions on the organism has been no longer considered as a primary one.

The above described state of the art for the different beverage typologies diverges from the new food trends towards which consumers seem to be presently oriented. As a matter of fact, in the most recent years, above all in the food field, a tendency to choose foodstuffs that are functional and beneficial to the organism has become increasingly more important. That is to say, a health concept of foodstuffs has been developed by consumers. A consumer wants to eat good and healthy food, which however must be at the same time functional and active for his/her organism. Up to today in the food field of beverages no products having specific functions have been put on the market.

In fact, of all beverages available on the market no selection exists which comprises beverages having specific functions, for example beverages having either a high energy potential, a high antioxidant potential or a high multivitamin potential, in combination with lyophilized milk ferments at high concentrations to be added at the moment of consuming said beverage or previously dissolved in the beverage itself.

Creation of a selection consisting of beverages having specific functions is addressed to all consumer categories but more particularly to sportsmen that, due to their physical activity, require a special beverage having the features of a beverage with specific functions combined with the properties of a functional food.

Among functional foods, products containing a milk matrix as the major component or as an ingredient thereof and bacterial strains are known, but there are not on the market beverages that are not of a milk matrix and are just the same in combination with live lactic bacteria.

It is known that some bacteria species are considered as "probiotic", in that they perform beneficial functions for the human organism when they are present in a live and viable form in the intestinal bacterial flora.

For example some probiotic bacteria, such as the lactic bacteria specific to yoghurt (that is *Lactobacillus bulgaricus* and *Streptococcus thermophilus)* stimulate the immune system, produce antagonist effects against pathogenic microorganisms, improve lactose digestion, perform a lipolytic and proteolytic activity making fats and proteins more digestible, reduce plasmatic values of cholesterol, protect the intestinal mucosa ensuring an even assimilation of the nutritive substances, produce polysaccharides that are active on some tumors and reduce viability of some enzyme-producing microorganisms catalyzing conversion of procarcinogen substances into carcinogen substances, synthesize some important vitamins of the B group.

Other probiotic bacteria producing some of the above mentioned beneficial effects and/or contributing in a synergic manner to production of these effects and in addition producing other beneficial effects are *Bifidobacteria, Lactobacillus acidophilus, Lactobacillus casei, Lactobacillus plantarum* and *Streptococcus faecium.*

For instance, *Bifidobacteria,* in addition to stimulating the immune system, reduce the amounts of ammonia and cholesterol in the blood, promote absorption of minerals and exert a competitive exclusion of pathogenic and putrefactive bacteria. In addition, *Bifidobacteria* are deemed to exert a preventive action against the colon cancer, in that these bacteria (and more particularly *Bifidobacterium bifidum)* reduce the activity of those enzymes that convert procarcinogen substances into carcinogen substances. The last-mentioned action is performed also by *Lactobacillus acidophilus* and *Lactobacillus casei.*

Synthesis of B-group vitamins, folic acid and antioxidants, due to the action of some of the above mentioned probiotic bacteria, represents a further beneficial effect.

Only some of the above mentioned probiotic bacteria have an endogenic origin in the intestinal flora. Moreover, the intestinal bacterial flora can be reduced, become unbalanced or be eliminated not only in individuals that have been submitted to antibiotic treatments or other therapies, or suffering from inflammatory intestinal diseases, but also in apparently healthy individuals. In addition, it is for example known that concentration of *Bifidobacteria* in the intestines is reduced with age, which will give rise to an increase in the concentration of pathogenic and putrefactive bacteria.

It is therefore important that not only probiotic bacteria that do not have an endogenic origin should be introduced into the intestinal flora, but also that the presence of the different probiotic bacteria, in a live and viable form and at high concentrations, should be ensured in the intestinal flora. It is also important that the introduced bacteria species should be suitably selected and have appropriate concentrations so that they may exert synergic and balanced actions between each other, to advantage of the host's health.

Therefore, there is still a requirement for availability on the market of beverages that do not have the drawbacks of the known art. In particular, there is still a need for a selection of beverages having specific functions capable of producing specific functional effects on the organism. That is to say, there is a need for making available on the market, functional beverages which are able to bring specific beneficial effects to the consumer's organism due to a synergy of health-nutrition effects. Functional properties are connected with the synergy between the effects caused by the specific components of the beverage in combination with selected mixtures of lyophilized live lactic bacteria.

It is an aim of the present invention to make use of beverages containing live lactic bacteria more easily accessible to, frequent and usual with any consumers, for the purpose of increasing, supplementing and balancing the intestinal flora, which will bring about advantages in terms of everyday health and sports activity.

It is a further aim of the present invention to make available on the market, functional beverages containing mixtures of live lactic bacteria, which are capable of reaching the intestines in a live and viable form, settling in the bacterial flora and growing, thereby performing important beneficial actions for the human health.

A still further aim of the present invention is to formulate mixtures of live lactic bacteria that are selected, as regards strain species and concentrations thereof, in such a manner as to perform their beneficial functions in a synergic manner with the specific type of beverage.

Another aim of the invention is to provided mixtures of live lactic bacteria to be used in combination with any beverage of a non-milk matrix, among which mineral waters, tea and others.

The foregoing and further aims that will become more apparent in the following detailed description have been reached by the Applicant's discovery according to which it has been found useful to employ selected mixtures of live lactic bacteria in combination with specific typologies of beverages.

It is therefore an object of the present invention to provide use of a mixture of lyophilized live lactic bacteria as an addition to a beverage of non-milk matrix.

It is a further object of the invention to provide a kit comprising two containers holding a non-milk matrix beverage and a mixture of lyophilized live lactic bacteria respectively, that are intended for being added to the beverage at the moment of being consumed.

Another object of the invention is to provide a beverage of non-milk matrix containing a mixture of live lactic bacteria.

The essential features of said use, kit and beverage are defined in the main claims 1, 12 and 22, respectively; some particular embodiments are defined in the dependent claims.

All percentages stated in the present specification and in claims are to be intended as percent by weight.

For preparation of the bacteria mixture, known strains of the above identified species can be used. Particularly advantageous results are achieved if the following strains are used:
- *Bifidobacterium breve:* LMG P-17501
- *Bifidobacterium infantis:* LMG P-17502
- *Bifidobacterium longum:* LMG P-17500
- *Bifidobacterium bifidum:* LMG P-17499
- *Lactobacillus acidophilus:* LMG P-17503
- *Streptococcus thermophilus:* LMG P-17225
- *Streptococcus thermophilus:* YS 46 I-1668
- *Streptococcus thermophilus:* YS 48 I-1669
- *Streptococcus thermophilus:* YS 52 I-1670
- *Lactobacillus bulgaricus:* LMG P-17224
- *Lactobacillus casei:* LMG P-17504
- *Lactobacillus plantarum:* ATCC 8014
- *Streptococcus faecium:* I - 1671
- *Streptococcus faecium:* SF 2
- *Streptococcus faecium:* SF 4

The above strains indicated by "LMG P-" are deposited with the BCCM/LMG collection of the University of Gent, Ledeganokstraat 36, B-9000 Gent, Belgium.

The above strains *Streptococcus thermophilus:* YS 46 I-1668, *Streptococcus thermophilus:* YS 48 I-1669, *Streptococcus thermophilus:* YS 52 I-1670 and *Streptococcus faecium:* I - 1671 are deposited with the CNCM - Collection Nationale de Cultures de Microorganismes - Institut Pasteur.

Strain ATCC 8014 is deposited with the American Type Culture Collection USA.

The above strains *Streptococcus faecium:* SF 2 and *Streptococcus faecium:* SF 4 are kept and commercially available with the Centro Ricerche Sitia-Yomo S.p.A.

Beverages being the object of the present invention are the result of the combination of two selections.

A first selection is addressed to determine beverages having specific effects. A second selection is addressed to determine particular species of microorganisms. Combination of the two selections aims at creating a new typology of beverages called "highly functional beverages" utilizing the features of each selection in a synergic manner.

Particularly advantageous results are obtained through use of cultures at high concentrations expressed in CFU/g (where CFU means colony forming units); more particularly the following concentrations are preferred:
- *Bifidobacterium breve:* at least 30 thousand million CFU/g more preferably 50 to 70 thousand million CFU/g
- *Bifidobacterium infantis:* at least 70 thousand million CFU/g, more preferably 100 to 150 thousand million CFU/g
- *Bifidobacterium longum:* at least 30 thousand million CFU/g, more preferably 50 to 70 thousand million CFU/g
- *Bifidobacterium bifidum:* at least 50 thousand million CFU/g, more preferably 75 to 100 thousand million CFU/g
- *Lactobacillus acidophilus:* at least 50 thousand million CFU/g, more preferably 70 to 100 thousand million CFU/g
- *Streptococcus thermophilus:* at least 100 thousand million CFU/g, more preferably 150 to 200 thousand million CFU/g
- *Lactobacillus bulgaricus:* at least 5 thousand million CFU/g, more preferably 10 to 30 thousand million CFU/g
- *Lactobacillus casei:* at least 5 thousand million CFU/g, more preferably 10 to 30 thousand million CFU/g
- *Lactobacillus plantarum:* at least 100 thousand million CFU/g, more preferably 150 to 250 thousand million CFU/g
- *Streptococcus faecium:* at least 100 thousand million CFU/g, more preferably 100 to 200 thousand million CFU/g.

Cultures of the above stated concentrations are commercially available from Centro Sperimentale del Latte S.p.A. - Strada per Merlino, 3 - ZELO BUON PERSICO (Lodi)
- Italy.

Preferably in the bacteria mixtures of the present invention, the overall concentration of bacteria forming the bacteria mixture is included between 10-100 thousand million CFU/g of mixture.

The mixtures of lyophilized live lactic bacteria used in accordance with the present invention comprise at least three species of bacteria, preferably at least four species, most preferably at least five species. Said mixtures combine different species of probiotic bacteria together, utilizing all properties of same in a synergic manner. For instance, it has been found that the presence of the lactic bacteria specific to yoghurt (that is *Lactobacillus bulgaricus* and *Streptococcus thermophllus)* is particularly useful to improve viability and promote growing of other species of bacteria, such as *Bifidobacteria, Lactobacillus acidophilus* and *Lactobacillus casei.* In addition, the lactic bacteria specific to yoghurt can hydrolyze oligosaccharides that are already present in the organism, releasing sugars that are useful for enhancing growth of *Bifidobacteria* and other beneficial bacteria.

Mixtures selected for the present invention have been conceived for use in combination with any type of beverage of non-milk matrix, preferably with beverages that can be of the energy-giving, antioxidant, multivitamin types or mineral waters.

In particular, the Applicant has found that it is preferable for the mixtures of lyophilized live bacteria to be added to said beverages of non-milk matrix directly by the consumer at the moment of use.

By adding the composition at the moment of use, the consumer does not feel any soar taste, in that bacteria do not perform any fermentation activity. These bacteria are at all events viable once settled in the intestines where they develop and are active in a selective mode.

In the kit of the present invention the bacteria mixture can be preserved, if it is packaged under highly hygienic conditions, in any container protecting it from contact with air, moisture and heat, and possibly from direct light, at the temperature of a common home refrigerator (i.e. at a temperature of 4-6°C) over a period of time of 9 months and at room temperature over a period of time of 6 months.

The kit of the present invention constitutes a commercial article solving the problem of facilitating, stimulating and spreading use of highly specific functional beverages for welfare of the organism.

This type of commercial article consists of a kit comprising:
- a container X holding a beverage of non-milk matrix, and
- a container Y holding a mixture of lyophilized live lactic bacteria.

Container Y preferably contains 0.1-1 g, more preferably 0.2-0.5 g, of a mixture of lyophilized live bacteria per 500 ml of beverage contained in container X. Container Y may consist of a reservoir plug for example and container X may be selected from various shapes of practical and handy bottles that are available on the market.

Said kit must be kept at the temperature at which the composition of container Y must be maintained and can be preserved over periods of time as long as six months at room temperature and over periods of time as long as nine months at the temperature of a refrigerator, i.e. included between 4 and 6°C. Once it has been bought, the bottle containing the beverage with the reservoir plug holding the mixture of lactic bacteria annexed thereto can be preserved in a common home refrigerator or at room temperature and can be used at any moment by opening both containers (bottle and reservoir plug) and mixing contents thereof at the moment the beverage is wished to be drunk.

Particular preferred embodiments of the present invention consist in use of mixtures of lyophilized live lactic bacteria as an addition to an energy-giving beverage, an antioxidant beverage, a multivitamin beverage, and mineral water.

An energy-giving beverage in accordance with the present invention preferably comprises:
- water, in an amount preferably included between 70 and 90%;
- fruit juice, preferably orange juice, in an amount preferably included between 5 and 12%;
- vitamins, preferably vitamin B1, B2, B6, niacin, to such an amount that at least 30% of the recommended daily allowance (RDA) is supplied, with reference to energy-giving beverage volumes of 500 ml;
- creatine or carnitine in amounts preferably included between 2 and 3 g/500 ml of energy-giving beverage and 0.1 and 0.2 g/ml of energy-giving beverage, respectively;
- mineral salts, preferably Mg and K salts, in amounts included between 30 and 40 mg/500 ml of energy-giving beverage and 55 and 65 mg/500 ml of energy-giving beverage, respectively;
- sugars, preferably sucrose and/or fructose and/or maltodextrins in a total amount included between 7 and 12%;
- optional flavors in a total amount included between 0.05 and 0.2%;
- a mixture of lyophilized lactic bacteria preferably including the following strains:
- *Streptococcus thermophilus* and *Lactobacillus bulgaricus,* in a total amount preferably included between 45 and 55%;
- *Lactobacillus acidophilus,* in an amount preferably included between 30 and 40%;
- *Lactobacillus casei,* in an amount preferably included between 5 and 10%;
- A mixture of *Bifidobacteria* consisting of:
*Bifidobacterium breve, Bifidobacterium infantis, Bifidobacterium longum, Bifidobacterium bifidum* in an amount preferably included between 5 and 10%, of which *Bifidobacterium bifidum* in an amount included between 65 and 85%.

The Applicant has found that said mixture of lyophilized lactic bacteria made up of particular carefully selected strains of bacteria and in right proportions performs an important functional role on the organism. The functional character is due to the fact that this specific mixture of bacteria takes part in:
- keeping a water/solid balance in the intestinal bolus;
- carrying out the hydrolysis of polysaccharides into simpler energy-giving compounds such as trisaccharides and tetrasaccharides that are therefore immediately available for the host;
- keeping the mucosa permeability stable, so as to ensure transportation of the nutrients through the intestinal membrane;
- forming vitamin complexes of the B group, with particular reference to vitamin B1, B2, B12 and to folic acid that will further implement the amount carried through the beverage;
- forming short-chain fat acids such as acetic acid, butyric acid, propionic acid that represent simple energy-giving elements available for the host;
- forming peptides and even essential amino acids which are available as plastic and energy-giving source for the host;
- reducing the intestinal pH with modification of the acid-base balance, thereby promoting absorption of mineral substances (greater bioavailability);
- inhibiting deamination and microbial decarboxylation of amino acids while at the same time ensuring saving in food amino acids; and
- performing hepato-protecting functions by deconjugating bile acids.

The Applicant has found that the functional quality carried out by said mixture of lactic bacteria in a synergic manner with the functional quality carried out by the other beverage components ensures a high and quick energy saving for the consumer host.

In putting the invention into practice in the form of a kit, the lyophilized bacteria mixture is preferably contained in a reservoir plug and the overall concentration of lyophilized lactic bacteria is preferably included between 10 and 100 thousand millions per gram of bacteria mixture. The ferment amount added to the energy-giving beverage is preferably included between 0.1 and 1 g per 100 ml of beverage; consequently the milk ferment content after dissolution in the beverage, preferably at the moment of drinking the same, is included between 1 and 100 thousand millions per 500 ml of beverage. The energy-giving beverage has a caloric contribution of about 210 Kcal/500 ml.

Another preferred embodiment being the object of the present invention consists of an antioxidant green-tea beverage preferably comprising:
- water, in an amount preferably included between 72 and 92%;
- green-tea extract, in an amount preferably included between 0.1 and 0.25%;
- tea extract, in an amount preferably included between 0.01 and 0.2%;
- fruit juice, preferably lemon juice, in an amount included between 1 and 5%;
- antioxidant vitamins, preferably of the group A, C, E, to such an amount that at least 30% of the recommended daily allowance (RDA) is supplied per 500 ml of beverage;
- selenium, preferably in a total amount included between 6 and 10 mg;
- sugars, preferably sucrose in a total amount included between 6 and 10%;
- optional flavors in a total amount included between 0.05 and 0.2%;
- a mixture of lyophilized lactic bacteria preferably including the following strains:
- *Streptococcus thermophilus* and *Lactobacillus bulgaricus,* in a total amount preferably included between 50 and 60%;
- *Lactobacillus acidophilus,* in an amount preferably included between 35 and 45%;
- A mixture of *Bifidobacteria* consisting of:
*Bifidobacterium breve, Bifidobacterium infantis, Bifidobacterium longum, Bifidobacterium bifidum* in an amount preferably included between 5 and 15%, of which *Bifidobacterium bifidum* in an amount included between 75 and 85%.
- *Streptococcus faecium,* in an amount preferably included between 5 and 10%.

The Applicant has found that the above mixture of lyophilized lactic bacteria made up of particular bacteria strains which have been carefully selected and are in the right proportions, performs an important functional role on the organism. The functional character is due to the fact that this specific mixture of bacteria takes part in:
- reducing the flora that produces procarcinogen enzymes such as nitroreductase and β-glucuronidase by preventing formation of nitrosamines thereby completing the antioxidant action of vitamin C;
- deconjugating the primary bile acids, thereby exerting a hepato-protecting action;
- regulating the immune-competence from a local and systemic point of view; and
- carrying out a detoxicating action through reduction of the urease-positive flora or neutralization of toxins.

The Applicant has found that by the above mentioned functions performed by the bacteria mixture set forth above a synergic action is obtained which is complementary to the specifically antioxidant functions carried out by the beverage components.

In putting the present invention into practice in the form of a kit the lyophilized bacteria mixture is preferably contained in a reservoir plug and the overall concentration of the lyophilized lactic bacteria is preferably included between 10 and 100 thousand millions per gram of the bacteria mixture. The amount of ferments added to the antioxidant beverage is preferably included between 0.1 and 1 g per 500 ml of beverage; consequently the milk ferment content after dissolution in the beverage, preferably at the moment of drinking the same, is included between 1 and 100 thousand millions per 500 ml of beverage. The antioxidant beverage has a caloric contribution of about 200 Kcal/500 ml.

Another preferred embodiment being the object of the present invention consists of a multivitamin beverage preferably comprising:
- water, in an amount preferably included between 55 and 85%;
- fruit juice, preferably orange and/or carrot and/or lemon juice, in an amount preferably included between 10 and 25%, 4 and 8% and 1 and 5%, respectively;
- vitamins, preferably of the C group, niacin, provitamin A (β-Carotene), E, pantothenic acid, B6, B2, folacin, biotin, B12 to such an amount that 15-30% of the recommended daily allowance (RDA) is ensured per 500 ml of beverage;
- sugars, preferably sucrose in a total amount included between 4 and 7%;
- optional flavors in a total amount included between 0.05 and 0.2%;
- a mixture of lyophilized lactic bacteria preferably including the following strains:
- *Streptococcus thermophilus* and *Lactobacillus bulgaricus,* in a total amount preferably included between 20 and 30%;
- *Lactobacillus acidophilus,* in an amount preferably included between 40 and 60%;
- *Lactobacillus casei,* in an amount preferably included between 20 and 40%;
- *Lactobacillus plantarum,* in an amount preferably included between 5 and 10%.

The Applicant has found that said mixture of lyophilized lactic bacteria made up of particular bacteria strains which have been carefully selected and are in right proportions, performs and important functional role on the organism, which in a synergic manner supplements the functional role performed by the other beverage components.

The functional character is due to the fact that this specific bacteria mixture takes part in:
- maintaining the autochthonous intestinal flora balance enabling a regular synthesis of the vitamins of the B group and vitamins K;
- stabilizing the permeability of the cell membrane of the gastrointestinal system, enabling absorption of the diet vitamins;
- cooperating with vitamin E of the diet in maintaining the permeability features of the membrane; and
- carrying out synthesis of the vitamins, referring particularly to B, PP, K complex, folic acid and pantothenic acid.

In putting the present invention into practice in the form of a kit, the lyophilized bacteria mixture is preferably contained in a reservoir plug and the overall concentration of the lyophilized lactic bacteria is preferably included between 10 and 100 thousand millions per gram of bacteria mixture. The amount of ferments added to the multivitamin beverage is preferably included between 0.1 and 1 g per 500 ml of beverage; consequently the milk ferment content after dissolution in the beverage, preferably at the moment of drinking the same, is included between 1 and 100 thousand millions per 500 ml of beverage. The multivitamin beverage has a caloric contribution of about 190 Kcal/500 ml.

In addition, the Applicant has found it useful to conceive fizzy and natural mineral water beverages providing addition of lactic bacteria mixtures, preferably in a proportion of 0.1-1 g/500 ml of mineral water.

Preferentially, the involved mineral water is a natural mineral water low in mineral content, which contains the following ions:
- sodium ion, at a concentration of about 7.1 mg/l;
- potassium ion, at a concentration of about 1.2 mg/l;
- magnesium ion, at a concentration of about 27 mg/l;
- calcium ion, at a concentration of about 46 mg/l;
- hydrocarbon ion, at a concentration of about 275 mg/l;
- hydrochloric ion, at a concentration of about 2.4 mg/l;
- sulphuric ion, at a concentration of about 6.3 mg/l;
- silica (expressed as SiO₂), at a concentration of about 16 mg/l;
- traces of hydrofluoric ion and strontium.

Preferably the bacteria mixture to be added to mineral water has the following composition:
- *Streptococcus thermophilus* and *Lactobacillus bulgaricus,* in a total amount preferably included between 40 and 60%;
- *Lactobacillus acidophilus,* in an amount preferably included between 5 and 15%;
- *Lactobacillus casei,* in an amount preferably included between 4 and 8%;
- A mixture of *Bifidobacteria* consisting of:
*Bifidobacterium breve, Bifidobacterium infantis, Bifidobacterium longum, Bifidobacterium bifidum* in an amount preferably included between 20 and 30%, of which *Bifidobacterium bifidum* in an amount included between 60 and 80%;
- *Streptococcus faecium,* in an amount preferably included between 2 and 7%;
- *Lactobacillus plantarum,* in an amount preferably included between 3 and 8%.

From the above it appears that use of mixtures of lyophilized bacteria in combination with any beverage by a kit (consisting of a small bottle and a reservoir plug, for example) being the object of the present invention is simple, flexible and very useful because it promotes welfare of the human organism by detoxicating it as well as normalizing and boosting the intestinal flora functions.

The following examples are reproduced for the purpose of illustrating some embodiments of the invention, without however limiting the range thereof.

The bacteria concentrations used in the below examples are the following:
- *Bifidobacterium breve:* 50 thousand million CFU/g;
- *Bifidobacterium infantis:* 110 thousand million CFU/g;
- *Bifidobacterium longum:* 55 thousand million CFU/g;
- *Bifidobacterium bifidum:* 80 thousand million CFU/g;
- *Lactobacillus acidophilus:* 90 thousand million CFU/g;
- *Streptococcus thermophilus:* 170 thousand million CFU/g;
- *Streptococcus thermophilus:* YS 46 I-1668
- *Lactobacillus bulgaricus:* 15 thousand million CFU/g;
- *Lactobacillus casei:* 12 thousand million CFU/g;
- *Lactobacillus plantarum:* 160 thousand million CFU/g; and
- *Streptococcus faecium:* 150 thousand million CFU/g.

### Example 1 (energy-giving beverage)

The bacteria mixture/beverage proportion is 0.2 g of bacteria mixture per 500 ml of beverage.
The bacteria mixture composition is the following:
- *Streptococcus thermophilus* and *Lactobacillus bulgaricus,* at a concentration of 50%
- *Lactobacillus acidophilus,* at a concentration of 40%;
- *Lactobacillus casei,* at a concentration of 5%;
- A mixture of *Bifidobacteria* consisting of:
*Bifidobacterium breve, Bifidobacterium infantis,* *Bifidobacterium longum, Bifidobacterium bifidum* at a concentration of 5%, of which *Bifidobacterium bifidum* at a concentration of 70%.

The beverage composition is the following:
- water 80%,
- orange juice 10%;
- vitamins B1, B2, B6 and niacin 8 mg/500 ml;
- creatine 1.9 mg/500 ml;
- mineral salts Mg and K 30 mg/500 ml;
- sugars: sucrose 4%; fructose 3% and maltodextrins 3%; and
- flavors 0.1%.

### Example 2 (antioxidant beverage)

The bacteria mixture/beverage proportion is 0.3 g of bacteria mixture per 500 ml of beverage.

The bacteria mixture composition is the following:
- *Streptococcus thermophilus* and *Lactobacillus bulgaricus,* at an overall concentration of 50;
- *Lactobacillus acidophilus,* at a concentration of 36%;
- A mixture of *Bifidobacteria* consisting of:
*Bifidobacterium breve, Bifidobacterium infantis, Bifidobacterium longum, Bifidobacterium bifidum* at a concentration of 6%, of which *Bifidobacterium bifidum* at a concentration of 80%.
- *Streptococcus faecium,* at a concentration of 8%.

The beverage composition is the following:
- water 90%;
- green tea extract 0.1%;
- tea extract 0.1%;
- lemon juice 2%;
- vitamins: A, C and E 60 mg/500 ml;
- selenium 8 mg/500 ml;
- sugars 7.7%; and
- flavors 0.1%.

### Example 3 (multivitamin beverage)

The bacteria mixture/beverage proportion is 0.1 g of bacteria mixture per 500 ml of mineral water.

The bacteria mixture composition is the following:
- *Streptococcus thermophilus* and *Lactobacillus bulgaricus,* at an overall concentration of 20;
- *Lactobacillus acidophilus*, at a concentration of 50%;
- *Lactobacillus casei,* at a concentration of 20%;
- *Lactobacillus plantarum,* at a concentration of 10%.

The composition of the mineral water is the following:
- water 70%
- orange juice 15%;
- carrot juice 5%;
- lemon juice 4%;
- vitamins: C, niacin, provitamin A, E, pantothenic acid, B6, B2, folacin, biotin, and B12 at an overall concentration of 75 mg/500 ml;
- sugars 5.85%; and
- flavors 0.15%.

### Example 4 (natural low-in-mineral-content water)

The bacteria mixture/beverage proportion is 0.3 g of bacteria mixture per 500 ml of mineral water.

The bacteria mixture composition is the following:
- *Streptococcus thermophilus* and *Lactobacillus bulgaricus,* at an overall concentration of 50%;
- *Lactobacillus acidophilus,* at a concentration of 10%;
- *Lactobacillus casei,* at a concentration of 5%;
- A mixture of *Bifidobacteria* consisting of:
*Bifidobacterium breve, Bifidobacterium infantis,* *Bifidobacterium longum, Bifidobacterium bifidum* at an overall concentration of 25%, of which *Bifidobacterium bifidum* at a concentration of 75%;
- *Streptococcus faecium,* at a concentration of 5%;
- *Lactobacillus plantarum,* at a concentration of 5%.

The mineral water composition is the following:
- sodium ion, at a concentration of 7.2 mg/l;
- potassium ion, at a concentration of 1.1 mg/l;
- magnesium ion, at a concentration of 26 mg/l;
- calcium ion, at a concentration of 47 mg/l;
- hydrocarbon ion, at a concentration of 274 mg/l;
- hydrochloric ion, at a concentration of 2.3 mg/l;
- sulphuric ion, at a concentration of 6.2 mg/l;
- silica (expressed as SiO₂), at a concentration of 17 mg/l;
- traces of hydrofluoric ion and strontium.

## Claims

1. Use of a mixture of lyophilized live lactic bacteria comprising at least three bacteria species selected from *Bifidobacterium breve, Bifidobacterium infantis, Bifidobacterium longum, Bifidobacterium bifidum, Lactobacillus acidophilus, Streptococcus thermophilus, Lactobacillus bulgaricus, Lactobacillus casei, Lactobacillus plantarum* and *Streptococcus faecium* as an addition to a beverage of non-milk matrix.

2. Use as claimed in claim 1, wherein the lactic bacteria mixture comprises at least four species.

3. Use as claimed in claim 1 and/or 2, wherein the overall concentration of bacteria forming the mixture is included between 10 and 100 thousand million CFU/g of bacteria mixture.

4. Use as claimed in one or more of the preceding claims, wherein the concentration of bacteria used for preparing the bacteria mixture are the following:
- *Bifidobacterium breve:* at least 30 thousand million CFU/g;
- *Bifidobacterium infantis:* at least 70 thousand million CFU/g;
- *Bifidobacterium longum:* at least 30 thousand million CFU/g;
- *Bifidobacterium bifidum:* at least 50 thousand million CFU/g;
- *Lactobacillus acidophilus:* at least 50 thousand million CFU/g;
- *Streptococcus thermophilus:* at least 100 thousand million CFU/g;
- *Lactobacillus bulgaricus:* at least 5 thousand million CFU/g;
- *Lactobacillus casei:* at least 5 thousand million CFU/g;
- *Lactobacillus plantarum:* at least 100 thousand million CFU/g; and
- *Streptococcus faecium:* at least 100 thousand million CFU/g.

5. Use as claimed in one or more of the preceding claims, wherein addition of the bacteria mixture is carried out in a proportion of 0.1 - 1 g per 100 ml of beverage of non-milk matrix.

6. Use as claimed in one or more of the preceding claims, wherein addition of the bacteria mixture to the beverage is carried out at the moment of drinking the same.

7. Use as claimed in one or more of the preceding claims, wherein the beverage is mineral water, or a beverage comprising water and at least three other components selected from fruit juices, carrot juice, vitamins, creatine, carnitine, mineral salts, selenium, tea extract, green tea extract, sugars and flavors.

8. Use as claimed in one or more of the preceding claims, wherein the bacteria species are selected from: *Streptococcus thermophilus, Lactobacillus bulgaricus, Lactobacillus acidophilus, Lactobacillus casei, Bifidobacterium breve, Bifidobacterium infantis, Bifidobacterium longum* and *Bifidobacterium bifidum* and the beverage has a composition comprising: water, fruit juice, vitamins, creatine and/or carnitine, mineral salts and sugars.

9. Use as claimed in one or more of claims 1 to 7, wherein the bacteria species are selected from *Streptococcus thermophilus, Lactobacillus bulgaricus, Lactobacillus acidophilus, Bifidobacterium breve,* *Bifidobacterium infantis, Bifidobacterium longum, Bifidobacterium bifidum, Streptococcus faecium* and the beverage has a composition comprising: water, green tea extract, tea extract, fruit juice, vitamins, antioxidants, selenium and sugars.

10. Use as claimed in one or more of claims 1 to 7, wherein the bacteria species are selected from: *Streptococcus thermophilus, Lactobacillus bulgaricus, Lactobacillus acidophilus, Lactobacillus casei, Lactobacillus plantarum* and the beverage has a composition comprising: water, fruit and/or carrot juice, vitamins and sugars.

11. Use as claimed in one or more of claims 1 to 7, wherein the bacteria species are selected from: *Streptococcus thermophilus, Lactobacillus bulgaricus, Lactobacillus acidophilus, Lactobacillus casei, Bifidobacterium breve, Bifidobacterium infantis, Bifidobacterium longum, Bifidobacterium bifidum, Streptococcus faecium, Lactobacillus plantarum,* and the beverage is mineral water.

12. A kit comprising:
- a container X holding a beverage of non-milk matrix, and
- a container Y holding a mixture of lyophilized live lactic bacteria comprising at least three bacteria species selected from *Bifidobacterium breve, Bifidobacterium infantis, Bifidobacterium longum, Bifidobacterium bifidum, Lactobacillus acidophilus, Streptococcus thermophilus, Lactobacillus bulgaricus, Lactobacillus casei, Lactobacillus plantarum and Streptococcus faecium,* both said containers being closed and intended for opening at the moment of use of said non-milk matrix beverage, and said container Y being intended for the purpose of adding the mixture of lyophilized live lactic bacteria therein contained to said beverage at the moment of drinking the same.

13. A kit as claimed in claim 12, wherein the lactic bacteria mixture comprises at least four species.

14. A kit as claimed in claim 12 and/or 13, wherein the overall concentration of bacteria forming the mixture is included between 10 and 100 thousand million CFU/g of bacteria mixture.

15. A kit as claimed in one or more of claims 12 to 14, wherein the concentration of bacteria used for preparing the bacteria mixture are the following:
- *Bifidobacterium breve:* at least 30 thousand million CFU/g;
- *Bifidobacterium infantis:* at least 70 thousand million CFU/g;
- *Bifidobacterium longum:* at least 30 thousand million CFU/g;
- *Bifidobacterium bifidum:* at least 50 thousand million CFU/g;
- *Lactobacillus acidophilus:* at least 50 thousand million CFU/g;
- *Streptococcus thermophilus:* at least 100 thousand million CFU/g;
- *Lactobacillus bulgaricus:* at least 5 thousand million CFU/g;
- *Lactobacillus casei:* at least 5 thousand million CFU/g;
- *Lactobacillus plantarum:* at least 100 thousand million CFU/g;
- *Streptococcus faecium:* at least 100 thousand million CFU/g.

16. A kit as claimed in one or more of claims 12 to 15, wherein container Y hold 0.1-1 g of a mixture of lyophilized live bacteria per 500 ml of non-milk matrix beverage of container X.

17. A kit as claimed in one or more of claims 12 to 16, wherein the beverage is mineral water or a beverage comprising water and at least three other components selected from fruit juices, carrot juice, vitamins, creatine, carnitine, mineral salts, selenium, green tea extract, sugars and natural flavors.

18. A kit as claimed in one or more of claims 12 to 17, wherein the bacteria species are selected from: *Streptococcus thermophilus, Lactobacillus bulgaricus, Lactobacillus acidophilus, Lactobacillus casei, Bifidobacterium breve, Bifidobacterium infantis, Bifidobacterium longum* and *Bifidobacterium bifidum* and the beverage has a composition comprising: water, fruit juice, vitamins, creatine and/or carnitine, mineral salts and sugars.

19. A kit as claimed in one or more of claims 12 to 17, wherein the bacteria species are selected from *Streptococcus thermophilus, Lactobacillus bulgaricus, Lactobacillus acidophilus, Bifidobacterium breve, Bifidobacterium infantis, Bifidobacterium longum, Bifidobacterium bifidum* and *Streptococcus faecium* and the beverage has a composition comprising: water, green tea extract, tea extract, fruit juice, vitamins, antioxidants, selenium and sugars.

20. A kit as claimed in one or more of claims 12 to 17, wherein the bacteria species are selected from: *Streptococcus thermophilus, Lactobacillus bulgaricus, Lactobacillus acidophilus, Lactobacillus casei, Lactobacillus plantarum* and the beverage has a composition comprising: water, fruit and/or carrot juice, vitamins and sugars.

21. A kit as claimed in one or more of claims 12 to 17, wherein the bacteria species are selected from: *Streptococcus thermophilus, Lactobacillus bulgaricus, Lactobacillus acidophilus, Lactobacillus casei, Bifidobacterium breve, Bifidobacterium infantis, Bifidobacterium longum, Bifidobacterium bifidum, Streptococcus faecium, Lactobacillus plantarum,* and the beverage is mineral water.

22. A beverage of non-milk matrix containing a mixture of live lactic bacteria comprising at least three bacteria species selected from the following: *Bifidobacterium breve, Bifidobacterium infantis, Bifidobacterium longum, Bifidobacterium bifidum, Lactobacillus acidophilus, Streptococcus thermophilus, Lactobacillus bulgaricus, Lactobacillus casei, Lactobacillus plantarum and Streptococcus faecium.*

23. A beverage as claimed in claim 22 wherein the bacteria mixture comprises at least four species.

24. A beverage as claimed in claim 22 and/or 23, wherein the overall concentration of bacteria forming the mixture is included between 10 and 100 thousand million CFU/g of bacteria mixture.

25. A beverage as claimed in one or more of claims 22 to 24, wherein the concentration of bacteria used for preparing the bacteria mixture are the following:
- *Bifidobacterium breve:* at least 30 thousand million CFU/g;
- *Bifidobacterium infantis:* at least 70 thousand million CFU/g;
- *Bifidobacterium longum:* at least 30 thousand million CFU/g;
- *Bifidobacterium bifidum:* at least 50 thousand million CFU/g;
- *Lactobacillus acidophilus:* at least 50 thousand million CFU/g;
- *Streptococcus thermophilus:* at least 100 thousand million CFU/g;
- *Lactobacillus bulgaricus:* at least 5 thousand million CFU/g;
- *Lactobacillus casei:* at least 5 thousand million CFU/g;
- *Lactobacillus plantarum:* at least 100 thousand million CFU/g; and
- *Streptococcus faecium:* at least 100 thousand million CFU/g.

26. A beverage as claimed in one or more of claims 22 to 25, wherein the lactic bacteria mixture is present in a proportion of 0.1-1 g per 500 ml of a non-milk matrix beverage.

27. A beverage as claimed in one or more of claims 24 to 26, wherein said beverage is mineral water or a beverage comprising water and at least three other components selected from fruit juices, carrot juice, vitamins, creatine, carnitine, mineral salts, selenium, tea extract, green tea extract, sugars and natural flavors.

28. A beverage as claimed in one or more of claims 22 to 27, wherein said beverage has a composition comprising water, fruit or carrot juice, vitamins, creatine and/or carnitine, mineral salts and sugars, and wherein the bacteria species are selected from: *Streptococcus thermophilus, Lactobacillus bulgaricus, Lactobacillus acidophilus, Lactobacillus casei, Bifidobacterium breve, Bifidobacterium infantis, Bifidobacterium longum* and *Bifidobacterium bifidum.*

29. A beverage as claimed in one or more of claims 22 to 27, wherein said beverage has a composition comprising water, green tea extract, tea extract, fruit juice, vitamins, antioxidants, selenium and sugars and wherein the bacteria species are selected from: *Streptococcus thermophilus, Lactobacillus bulgaricus, Lactobacillus acidophilus, Bifidobacterium breve, Bifidobacterium infantis, Bifidobacterium longum, Bifidobacterium bifidum, Streptococcus faecium.*

30. A beverage as claimed in one or more of claims 22 to 27, wherein said beverage has a composition comprising water, fruit and/or carrot juice, vitamins and sugars and wherein the bacteria species are selected from: *Streptococcus thermophilus, Lactobacillus bulgaricus, Lactobacillus acidophilus, Lactobacillus casei, Lactobacillus plantarum.*

31. A beverage as claimed in one or more of claims 22 to 27, wherein said beverage is mineral water and wherein the bacteria species are selected from: *Streptococcus thermophilus, Lactobacillus bulgaricus, Lactobacillus acidophilus, Lactobacillus casei, Bifidobacterium breve, Bifidobacterium infantis, Bifidobacterium longum, Bifidobacterium bifidum, Streptococcus faecium, Lactobacillus plantarum.*
